# EUROPÄISCHE PATENTSCHRIFT

(11) **EP 1 134 170 B1**
(45) Veröffentlichungstag und Bekanntmachung des Hinweises auf die Patenterteilung: **01.09.2004**
(21) Anmeldenummer: 01105679.3
(22) Anmeldetag: 07.03.2001
(51) Int. Cl.: B65G 1/02

(54) **Modulartig zusammensetzbare Struktur für Lagerregale**
Modular structure for assembly of storage shelves
Structure à assemblage modulaire pour des rayons de stockage

(30) Priorität: 16.03.2000 IT BZ200015
(43) Veröffentlichungstag der Anmeldung: 19.09.2001
(73) Patentinhaber: Borz, Fabio, 38068 Rovereto (Trento) (IT)
(72) Erfinder: Borz Fabio, 38068 Rovereto (TN) (IT)
(74) Vertreter: Oberosler, Ludwig

(56) Entgegenhaltungen:
- GB-A- 2 197 183
- US-A- 3 248 828
- US-A- 3 985 083
- US-A- 4 230 052
- US-A- 4 582 001

## Beschreibung

Es sind modulartig zusammensetzbare Strukturen für Lagerregale bekannt welche Strukturelemente einsetzen die an ihrer gesamten oder teilweisen Längserstreckung, Bohrungen und/oder Langlöcher für die Anbringung von Befestigungsmitteln, Verbindungsmitteln und/oder von verschiedenartigen Auflageelementen, zwecks direkter Befestigung von Ablagen, aufweisen. Die Strukturelemente der bekannten Strukturen können offenen oder geschlossenen Querschnitt haben und sind relativ einfach herstellbar, wobei sie jedoch den Nachteil aufweisen, daß eine hohe Anzahl von Befestigungselementen oft an schwer zugänglichen Stellen anzubringen sind und daß, wegen der hohen Anzahl von Bohrungen eine gründliche und leichte Reinigung erschwert wird. Das Reinigungsproblem ist im Falle von rohrartigen Strukturelementen noch gravierender da der Schmutz durch die Löcher eindringt und sich im Rohrinneren, wo er schwer erreichbar ist, ansammeln kann. Ein weiterer Nachteil dieser bekannten Strukturen besteht darin, daß der Zusammenbau der einzelnen Elemente durch Überlappung in den Befestigungsbereichen erfolgt wodurch Bereiche entstehen welche schwierig zu reinigen sind weil sich Schmutz zwischen den überlappten Oberflächen der Strukturelemente einnisten kann.
Insbesondere aus der GB 2 197 183 A (Edward Collin Duce) ist eine derartige modulartig zusammen-setzbare Struktur für Lagerregale bekannt, wobei die senkrechten Strukturelemente als Profilrohre mit quadratischem Querschnitt ausgebildet sind. An den Wänden dieser senkrechten Strukturelemente sind, zumindest über einen Teil der Längserstreckung, Durchbrüche angeordnet in welche die Enden der waagrechten Strukturelemente eingerastet werden können. Um das Einrasten und somit die Verbindung zwischen den senkrechten und den waagrechten Strukturelementen zu er-möglichen sind, gemäß einer einfacheren Ausführung, die Enden der waagrechten Strukturelemente mit einem Einschnitt an der unteren Seite versehen so dass das Ende teilweise in die entsprechende Einrastöffnung am senkrechten Strukturelement eingeführt und darauf an der geradlinigen horizontalen Unterkante der Einrastöffnung mit dem Einschnitt eingerastet werden kann. Gemäß einer weiteren Ausführungsform sind die Enden der horizontaten Strukturelemente mit Verbindungselementen versehen von welchen gekröpfte, nach unten ragende Zungen abstehen welche in die Durchbrüche an den senkrechten Strukturelementen eingeführt und eingerastet werden.
Es sind auch Strukturen bekannt bei welchen das Anbringen der Ablagen durch Einfädeln von oben an den Pfosten erfolgt, mit dem Nachteil daß bei jedem Auswechseln oder Hinzufügen von Ablagen ein Abmontieren und neuerliches Montieren der Elemente erforderlich ist. Die bekannten Strukturen erfordern den Einsatz von Verstrebungen um die nötige Stabilität zu sichern. Viele der bekannten Strukturen bestehen aus unterschiedlichen Profilen welche nicht einen Zusammenbau auf Maß während der Montage ermöglichen. Die bekannten Strukturen sehen weiters, bei Kehrleisten oder Sockelleisten, nicht die Möglichkeit vor, daß die Struktur an der Wand anliegt. Die bekannten Strukturen und die Verbindungsart zwischen deren Elemente bieten nicht die Wahl zwischen einer Bodenmontage und einer hängenden Deckenmontage. Insbesondere die Strukturen mit Strukturelementen mit offenem Querschnitt sind eher schwer ohne eine entsprechende Stabilität aufzuweisen.
Die Erfindung stellt sich die Aufgabe eine modulartig zusammenbaubare Struktur für Lagerregale der vorher beschriebenen Art zu schaffen welche leicht und eventuell auf Maß am Montageort zusammengebaut werden kann, welche reinigungs-freundlich ist und eine beachtenswerte Stabilität aufweist ohne daß sie den Einsatz von Verstrebungen und hohe Präzision bei der Herstellung und der Montage der Elemente erfordert, wobei eine nachträgliche Montage oder Demontage der Ablagen, ohne Demontage der Struktur, ermöglicht wird.

Diese Aufgabe wird erfindungsgemäß dadurch gelöst, daß Strukturelemente mit geschlossenem, rohrartigem Querschnitt eingesetzt werden welche teils frei von Bohrungen sind und teils nur an den Endbereichen welche durch Verbindungselemente überdeckt werden Bohrungen aufweisen, wobei diese Verbindungselemente ein einfaches und schnelles Befestigungssystem bilden welches die Überlappung von Oberflächen an den Verbindungsbereichen zwischen den Strukturelementen und zwischen diesen und den Ablagen vermindert wobei immer die Versiegelung der Strukturelemente gegen das Eindringen oder Einfiltrieren von Schmutz erfolgt.

Erfindungsgemäß kann der Querschnitt der Strukturelemente quadratisch, rechteckig oder rund sein, er kann zum Beispiel durch Extrusion, im Biege- und Schweißverfahren oder durch Zusammenfügen von, zum Beispiel zwei, U-förmigen Profilen gebildet werden. Über die gesamte oder teilweise Längserstreckung der Strukturelemente, entlang der Mittelachse der Außenflächen, sind unter sich gleich beabstandete Einbuchtungen vorgesehen wobei der Achsabstand zwischen diesen den Modul für den Zusammenbau zwischen den Strukturelementen bestimmt. Diese Einbuchtungen können verschiedene Querschnitte aufweisen, vorzugsweise haben sie die Form eines Konusstumpfes, einer Kugelkuppe oder eines Konusstumpfes mit Kugelkuppe oder auch einer Pyramide oder eines Pyramidenstumpfes, der Überstand der Rückseite dieser Einbuchtungen aus der Profiloberfläche kann eher begrenzt sein, zum Beispiel von zwei bis dreimal die Wandstärke des Profils. Während die vertikalen Strukturelemente wie die Pfosten frei von durchgehenden Bohrungen sein können, weisen die horizontalen Strukturelemente, wie Abstandsstücke, Längselemente und eventuell die Ablagen, an den beiden Enden, an Stelle der äußersten Einbuchtungen, durchgehende Bohrungen auf welche zueinander koaxial an den einander entgegengesetzten Oberflächen des Profils angeordnet sind. Die Bohrungen weisen einen Durchmesser auf welcher dem größeren Durchmesser an der Rückseite der konischen Einbuchtung, bzw. der Diagonale der Grundfläche der pyramidenstumpfförmigen Einbuchtung der Stanzausformungen, welche an den Flanschen der Verbindungselemente vorgesehen sind, entspricht um den Senkkopf der Befestigungsschraube aufzunehmen. Erfindungsgemäß ist an den Verbindungsbereichen zwischen den vertikalen Strukturelementen (Pfosten) und den horizontalen Strukturelementen (Längselemente, Abstandsstücke) keine Überlappung sondern eine Frontalverbindung, zum Beispiel vom Ende des horizontalen Strukturelementes mit der Stirnseite gegen die seitliche Oberfläche des vertikalen Strukturelementes, vorgesehen. Um dies zu erreichen werden Flacheisen, Winkeleisen, Bügel und andere, für die Aufnahme von quer eingeführten Befestigunsschrauben, mit Stanzausformungen versehene Verbindungselemente eingesetzt, wobei diese Stanzausformungen einen konischen oder pyramidenstumpfförmigen Vorsprung bilden welcher gegen die seitlichen Oberflächen der zu verbindenden Profile vorstehen welche ihrerseits geeignet sind diese Vorsprünge der Stanzausformungen welche an den Verbindungselementen vorgesehen sind, aufzunehmen. Eventuell sind diese Verbindungselemente mit Einbuchtungen versehen deren vorstehende Rückseite den Einbuchtungen an den Oberflächen der Strukturelemente entsprechen. Die Enden der vertikalen und/oder der horizontalen Strukturelemente können mit einem Einsatz versehen sein welcher vorzugsweise aus Kunststoff gefertigt ist und Verschluß- oder auch Aussteifungs-, Einrast- und/oder Beilagefunktion hat, wobei das Eindringen und die Ablage von Schmutz und die Verformung des Profils im Bereich der Verbindung verhindert wird und eine wirksame Verbindung zwischen den vertikalen und den horizontalen Strukturelementen erreicht wird.

Zwecks Erreichung einer wirksamen Verbindung zwischen den Strukturelementen selbst und zwischen diesen und den Ablagen, welche durch eine effiziente und dauerhafte Verspannung zwischen den Teilen und durch eine ausgedehnte Auflagefläche welche die mit der Verbindung involvierten Oberflächen abdeckt, gekennzeichnet ist, schlägt die Erfindung vor, die axiale Wirkung einer Schraube zu nutzen welche durch die Stanzausformungen an den Verbindungselementen eingeführt ist und die Bohrungen am Ende des horizontalen Strukturelementes durchquert, um durch Einschrauben in eine Mutter oder eventuell in eine Gewindebohrung eine Kraftkomponente zu erzeugen welche einen Druck der Stirnfläche gegen die entsprechende Seitenfläche des vertikalen Strukturelementes erzeugt. Diese Kraftkomponente entsteht durch das Gleiten zwischen den angewinkelten Flächen der vorstehenden konischen oder pyramidenstumpfförmigen Bereiche der Stanzausformungen welche an den Verbindungselementen vorgesehen sind und dem, eventuell ausgeschmiegten, Rand der Bohrungen am Ende der horizontalen Strukturelemente. Um dies zu erreichen muß, in der Ausgangsstellung für die Verspannung der Verbindung, die Distanz zwischen der Achse welche durch die entsprechenden Stanzausformungen an den Verbindungselementen verläuft und der Achse des sich quer zur Längserstreckung der Flanschen des Verbindungselementes erstreckenden Strukturelementes, etwas kleiner sein als die Distanz zwischen der Achse welche durch die Bohrungen am Ende jenes Strukturelementes verläuft welches parallel zur Längserstreckung der Flanschen der Verbindungselemente verläuft und der Achse des Strukturelementes welches in einem Winkel von 90° zum ersten angeordnet ist. Die Stirnfläche des Strukturelementes welches sich parallel zu den Flanschen der Verbindungselemente erstreckt, wird vorzugsweise durch einem Einsatz, beispielsweise aus Kunststoff, welcher leicht über den äußersten Profilquerschnitt vorsteht, oder einer, aus dem Profil selbst gefertigten, Wand gebildet. Eine Abstandsbuchse kann, an Stelle des genannten Einsatzes, eingesteckt und zwischen den zueinander koaxialen Bohrungen am Ende des Strukturelementes, zum Beispiel durch Schweißen, befestigt werden. Im Falle des Einsatzes, ist dieser mit einer durchgehender Bohrung versehen welche den zueinander koaxialen Bohrungen am Profilende entspricht, oder mit einer Bohrung mit konischen Ausschmiegungen welche den Ausschmiegungen an den Verbindungselementen entsprechen, versehen. Die durchgehende Bohrung am Einsatz kann eine Gewindebohrung sein in welche die Befestigungsschraube eindrehbar ist. Natürlich ist der Einsatz mit geeigneten Längsrillen versehen um das Einschieben, ohne mit den nach innen vorstehenden Ausformungen der Einbuchtungen am Profil zu interferieren, zu ermöglichen. Vorzugsweise weist der Einsatz stirnseitig einen Vorsprung auf, welcher der Einbuchtung an den Strukturelementen entspricht um so, durch Eindringen in die Einbuchtung, einen Bezugspunkt für die Positionierung der Verbindung und eine Steckverbindung zu schaffen welche, bei eventuellem Vorhandensein von Einbuchtungen, auch an den Verbindungselementen, eine mehrfache Steckverbindung sein kann. Vorzugsweise ist dieser Einsatz erfindungsgemäß zweifach verwendbar indem er an seinen beiden Stirnseiten unterschiedliche Ausformungen aufweist so daß, je nach Einsetzrichtung, zum Beispiel eine Stirnseite mit Vorsprung und die andere mit rauher oder gummierter Oberfläche wirksam wird. Gemäß einer Weiterentwicklung des Erfindungsgedankens ist, unter Einsatz spezifischer Verbindungselemente, auch die direkte Verbindung unter den gegenseitig anliegenden Ablagen möglich. Die Erfindung sieht weiters den Einsatz von spezifischen Verbindungselementen vor um Strukturelemente mit rundem Querschnitt mit solchen mit quadratischem oder rechteckigem Querschnitt zu kombinieren. Insbesonders für die Elemente mit rundem Querschnitt ist ein Anpassungssystem vorgesehen welches eine modulare, teleskopartige Längsanpassung ermöglicht.

Die Erfindung schließt nicht aus, im Bereich der Verbindungen, eventuell an der selben Flansche eines Verbindungselementes und im Endbereich des stirnseitig befestigten Profils, zwei oder mehrere Schrauben vorzusehen wodurch eine mehrfache Spannwirkung erreicht wird.

Erfindungsgemäß können die Auflagen an den horizontalen Strukturelementen befestigt werden oder selbst mit einem geeigneten Querschnitt versehen werden um gleichzeitig die Funktionen der horizontalen Strukturelemente zu übernehmen, wobei eine direkte Verbindung mit den Pfosten vorgesehen ist.

Die Erfindung schließt nicht den Einsatz von vertikalen und/oder horizontalen Strukturelementen aus welche keine Einbuchtungen aufweisen, wobei die Arretierung der Verbindungen ausschließlich durch die Spannwirkung welche durch das gegenseitige Gleiten der konischen Flächen erzielt wird und/oder die Arretierung zusätzlich gesichert wird indem, zum Beispiel an den Verbindungselementen und/oder an der Stirnfläche der horizontalen Strukturelemente welche gegen der Seitenflächen der vertikalen Strukturelemente gedrückt werden, eine rauhe, eine gerändelte und/oder eine mit einem oder mehreren Körnern versehene Fläche vorgesehen ist.

Die Erfindung wird anschließend anhand einiger, in den beigelegten Zeichnungen schematisch dargestellter, Ausführungsbeispiele einer modulartig zusammensetzbaren Struktur für Lagerregale näher erklärt, dabei erfüllen die Zeichnungen rein erklärenden und nicht begrenzenden Zweck.

Die Fig. 1 ist eine perspektivische Darstellung einer erfindungsgemäßen modulartig zusammengebauten Struktur für Lagerregale in welche Strukturelemente mit rundem Querschnitt integriert sind, mit direkter Verbindung zwischen zwei Ablagen und mit verschiedenen Beispielen von Verbindungen.

Die Fig. 2 ist eine perspektivische auseinandergezogene Darstellung einer erfindungsgemäßen Verbindung zwischen einem Pfosten und zwei horizontalen Strukturelementen welche unterschiedlichen Querschnitt aufweisen und zueinander im rechten Winkel liegen, mit Einsatz eines äußeren und inneren Eckverbindungselementes; das Ende des Strukturelementes mit quadratischem Querschnitt weist einen Einsatz auf welcher teilweise im Schnitt dargestellt ist.

Die Fig. 3 ist die Draufsicht auf die in Fig. 2 dargestellte Verbindung.

Die Fig. 4 ist die Draufsicht auf die Verbindung mittels zweier interner Winkelelemente und einem Flachelement ohne Auflageflansche, zwischen einem vertikalen Pfosten und drei horizontalen Strukturelementen welche stirnseitig befestigt sind, in einer gemeinsamen Ebene liegen und T-förmig angeordnet sind.

Fig. 5 ist die Draufsicht auf die Verbindung zwischen einem vertikalen Pfosten und einem horizontalen Strukturelement welches stirnseitig, seitlich am Pfosten mittels Verbindungsbügel angebracht ist.

Die Fig. 6 ist die perspektivische Darstellung eines Verbindungselementes welches zwischen zwei anliegenden Ablagen angebracht werden kann.

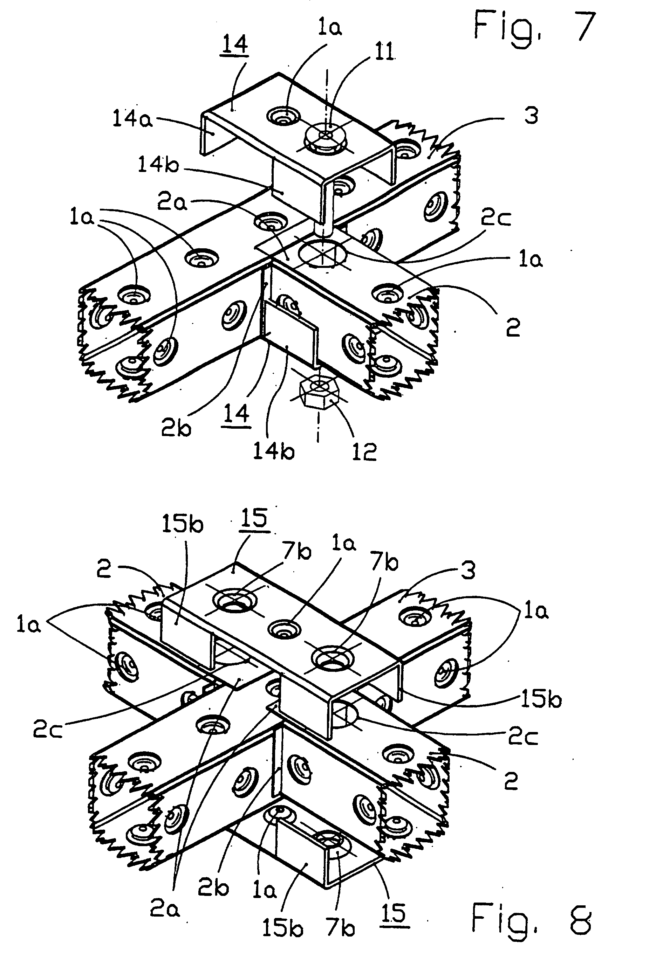

Die Fig. 7 ist eine perspektivische auseinandergezogene Darstellung einer T-förmigen Verbindung mittels zweier identischer Verbindungselemente mit drei Auflageflanschen, zwischen zwei Strukturelementen welche in einer gleichen Ebene liegen, wobei das Ende des stirnseitig angebrachten Elementes Auflageflanschen aufweist welche aus den Profilwänden selbst geformt sind.

Die Fig. 8 ist eine perspektivische auseinandergezogene Darstellung einer Kreuzverbindung mittels zweier identischer, mit vier Auflageflanschen versehener, Verbindungselemente zwischen, in einer gleichen Ebene liegenden, Strukturelementen wobei die stirnseitig angebrachten Elemente Auflageflanschen aufweisen welche aus den Profilwänden selbst geformt sind.

Die Fig. 9 ist die perspektivische Darstellung einer T-förmigen Verbindung zwischen zwei Strukturelementen welche runden Querschnitt aufweisen und in Längsrichtung teleskopartig modulartig anpaßbar sind.

Die Fig. 10 ist die Seitenansicht der in Fig. 9 gezeigten Verbindung.

Die Fig. 11 ist die Draufsicht der, in den Figuren 9 und 10 gezeigten, Verbindung.

Die modulartig zusammengebaute erfindungsgemäße Struktur besteht wesentlich aus Rohrprofilen mit quadratischem Querschnitt 1, 2, 3 welche an allen vier Außenwänden nach innen ragende Einbuchtungen 1a aufweisen, aus Ablagen 6, 6a und aus Verbindungselementen 7, 8, 9, 10, 14, 15, 16, 17 mit Schrauben 11 und Muttern 12. Die mit Einbuchtungen 1a versehenen Profile werden als vertikale Pfosten 1, als horizontale Abstandsstücke 2 und als Längselemente 3 eingesetzt. Die Pfosten 1 können an den Enden mit Einsätzen versehen werden um das Eindringen von Schmutz zu verhindern. Die Abstandsstücke 2 und die Längselemente 3 sind an beiden Enden, an zwei sich gegenüberliegenden Wänden, entsprechend der äußersten Einbuchtung 1a, mit Bohrungen 2c versehen, deren Rand eventuell ausgeschmiegt ist um den vorstehenden konischen Teil der Stanzausformungen 7b aufzunehmen welche an den Verbindungselementen 7, 8, 9, 10, 14, 15, 16 vorgesehen sind. Erfindungsgemäß erfolgt die Verbindung zwischen den Pfosten 1 und den Abstandsstücken 2, beziehungsweise den Längselementen 3 immer so, daß die Abstandsstücke 2, beziehungsweise die Längselemente 3, stirnseitig gegen die Seitenwände des Pfosten 1 anliegen. Die Verbindungsbügel 10 ermöglichen auch die Verbindung zwischen zwei Strukturelementen 1, 2, 3 welche parallel zueinander anliegen, weiters ist die stirnseitige Anbringung von Strukturelementen an einer einzigen oder an allen Seitenflächen eines beliebigen Strukturelementes 1, 2, 3 möglich. Der Achsabstand zwischen den Verbindungen ist durch den Abstand zwischen den Einbuchtungen 1a vorgegeben welche vorzugsweise relativ geringe Tiefe aufweisen und die Form eines Konusstumpfes, einer Kugelkuppe oder eines Konusstumpfes mit Kugelkuppe aufweisen.

Die Verbindungselemente 7, 8, 9, 10, 14, 15, 16 weisen Einbuchtungen 1a auf, welche gegen die zu verbindenden Strukturelemente ragen, weiters weisen sie Stanzausformungen 7b, welche ebenfalls mit ihrer konischen Ausformung gegendie Strukturelemente 1, 2, 3 gerichtet sind, und eventuell Auflage- oder Einsatzflanschen 14a, 14b, 15b, auf. Die Stanzausformungen 7b haben geeignete Form und Maße um den Senkkopf der Fixierschrauben 11 aufnehmen zu können. Die Bohrungen 2c welche an beiden Enden der Abstandsstücke 2 und der Längselemente 3 vorgesehen sind weisen einen, dem größeren Durchmesser des konisch vorstehenden Teiles der Stanzausformungen 7b, welche an den Verbindungselementen vorgesehen sind, entsprechenden Durchmesser auf. Eventuell können diese Bohrungen 2c eine konische nach außen gerichtete Ausschmiegung aufweisen welche in ihrer Neigung dem konisch vorstehenden Teil der Stanzausformungen 7b entspricht.

Um die Endbereiche der Abstandsstücke 3 und der Längselemente 3 zu verstärken, kann im Bereich der Bohrungen 2c ein Einsatz 13 aus Kunststoff oder eine Abstandsbuchse eingefügt sein. Der Einsatz 13 weist eine quer durchgehende Bohrung 13b auf welche an beiden Endbereichen ausgeschmiegt ist während an der Stirnseite vorzugsweise ein Vorsprung 13a vorgesehen ist welcher wesentlich den Einbuchtungen 1a entspricht. Vorzugsweise ragt der Einsatz 13, welcher mit der Achse der Bohrung 13a koaxial zur Achse der Bohrungen 2c positioniert ist, leicht mit der, mit Vorsprung 13a versehenen, Stirnseite über den äußersten Querschnitt des Profils 2, 3 um dadurch, in Verbindungsstellung, die Auflage im rechten Winkel zwischen den verbundenen Profilen 1, 2 zu sichern. Diese rechtwinklige Auflage welche durch den Einsatz bestimmt wird ermöglicht, auch bei nicht rechtwinklig zugeschnittenem Profil, immer eine rechtwinklige Verbindung herzustellen. Das bügelförmige Verbindungselement 10 ermöglicht weiters auch beispielsweise die Verbindung zwischen einem Abstandsstück 2 oder einem Längselement 3, welches in einem Winkel von 45° abgeschnitten ist, und dem vertikalen Pfosten 1. In diesem Fall besteht die Möglichkeit einen dem Einsatz 13 ähnlichen Einsatz zu verwenden welche eine schräge stirnseitige Auflagefläche aufweist. Weiters schließt die Erfindung nicht aus, an den Enden der Profile 1, 2, 3 Auflageflanschen 2b und/oder Einsetzflanschen 2a vorzusehen welche vorzugsweise aus den Profilwänden geformt sind. Auch die Verbindungselemente 14, 15, 16 sind mit Auflage- oder Einsetzflanschen 14a, 14b, 15b, 16b versehen, weiters wird nicht ausgeschlossen auch die Verbindungselemente 7, 8, 9, 10 mit ähnlichen Flanschen zu versehen.

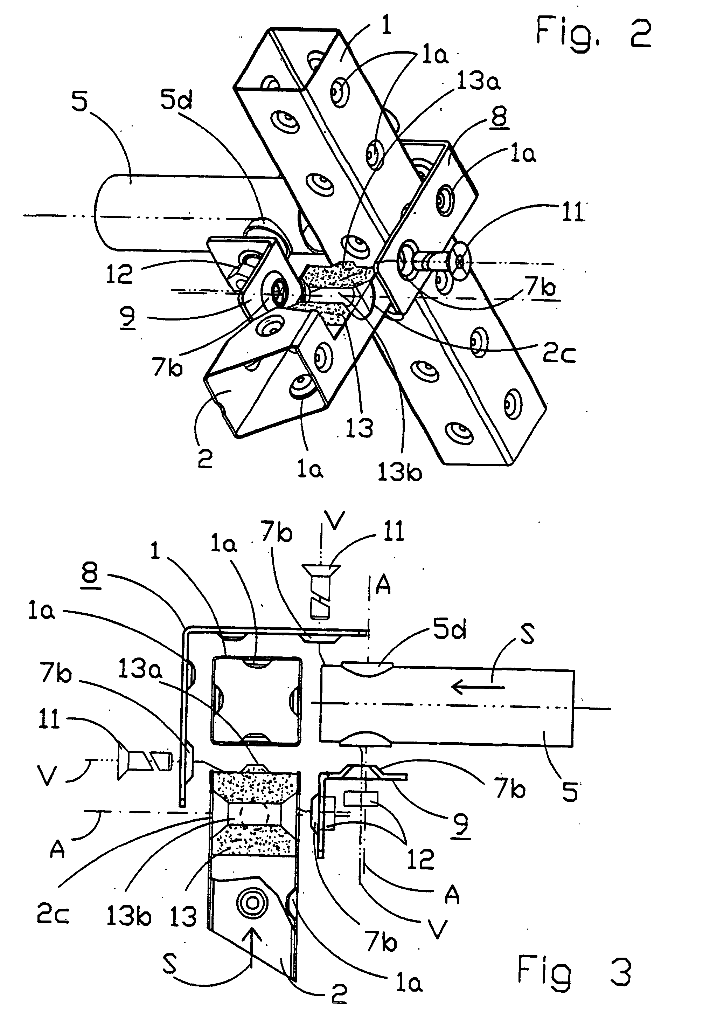

Die Erfindung schlägt vor, während der Herstellung der Verbindung, zwischen den die Verbindung bildenden Teilen, eine Zwangsverspannung unter den verbundenen Profilen 1, 2, 3 zu realisieren, so daß das Profil 2 welches stirnseitig, mit eventueller Zwischenlage des Einsatzes 13, gegen die Seitenfläche des Profils 1 (Fig. 2, 3) in axiale Richtung S gegen dieses angepreßt wird um dadurch möglichst die vollflächige Auflage der Stirnfläche ohne Zwischenräume und Spalte zu erreichen. Dies ist erfindungsgemäß realisierbar indem der Abstand zwischen der Längsachse des Pfosten 1 und der Achse A durch die Bohrungen 2c am Endbereich des Abstandsstückes 2 leicht größer ist als die Distanz zwischen der selben Längsachse des Pfosten 1 und der Achse V der entsprechenden Stanzausformungen 7b an den Verbindungselementen 8, 9. Der Abstand zwischen den Achsen A und V bewirkt in einer ersten Phase des Zusammenbaus, daß die konischen Teile der Stanzausformungen 7b welche von den Flanschen der Verbindungselemente 8, 9 (Fig. 2, 3) gegen die Bohrungen 2c am Profil 2 abstehen, nicht vollständig in die Bohrungen 2c eindringen können, dabei werden die entsprechenden Flanschen eine leicht gespreizte Stellung einnehmen. Um unter diesen Umständen die Schraube 11 einführen zu können ist es nötig, daß die Bohrung 13b des Einsatzes 13, oder einer eventuellen Abstandsbuchse, größeren Durchmesser hat als die Bohrung der Stanzausformungen deren Durchmesser wiederum etwas größer sein wird als jener der Schraube 11.

Die Längserstreckung der Schraube 11 wird natürlich die Spreizung der Flanschen der Verbindungselemente 8, 9 berücksichtigen so daß die Mutter 12 am Schraubenende aufgesetzt werden kann. Durch Anziehen der Schraube 11 werden die entsprechenden Flanschen der Verbindungselemente 8, 9 zwischen dem Senkkopf der Schraube 11 und der Mutter 12 zusammengezogen wobei die Konusflächen der beiden Stanzausformungen 7b innerhalb der entsprechenden Bohrungen 2c am Profil 2 gleiten wodurch eine Kraft S entsteht welche achsial gegen die Auflage an der Seitenfläche des Profils 1 wirkt und eine wirksame Verspannung zwischen den zu verbindenden Elementen entsteht. Die selbe Wirkung ist auch an Strukturelementen, zum Beispiel mit rundem Querschnitt 5, erreichbar wobei in diesem Fall querliegende Buchsen 5d vorgesehen sind deren durchgehende Bohrung gleichen Durchmesser hat wie der größere Durchmesser des vorstehenden konischen Teiles der Stanzausformungen 7b welche an den Flanschen der Verbindungselemente vorgesehen sind.

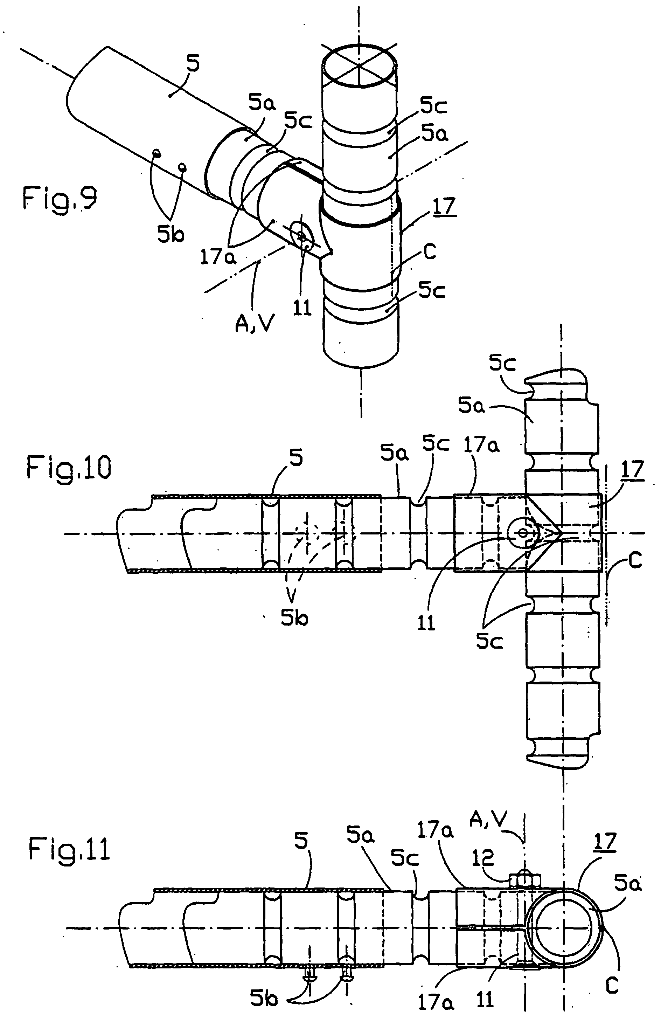

Die Erfindung sieht weiters den Einsatz von Strukturelementen mit rundem Querschnitt 5 (Fig. 9-11) in Kombination mit axialen Aufsteckelementen 5a, welche Außenrillen 5c aufweisen, vor um eine teleskopartige modulare axiale Anpassung zu erreichen welche in verschiedenen Positionen mittels Schrauben 5b welche radial oder gemäß einer Sekante in Gewindebohrungen wirken welche an der Wand des Strukturelementes 5 gemäß einem gleichen, vielfachen, teilweisen und/oder progressiv verändertem Abstand, bezogen auf dem modularen Abstand zwischen den Außenrillen 5c, vorgesehen sind. Auch für diese Art von Strukturelemente 5 schlägt die Erfindung den Einsatz verschiedener Verbindungselemente vor, wie zum Beispiel das Element 17 welches eventuell aus zwei Schalen 17a gebildet ist die, gemäß einer Achse C, scharnierartig verbunden oder eingehängt sind um eine T-förmige Verbindung herzustellen. Vorteilhafterweise ist die Schraube 11 in diesen Verbindungselementen so eingeführt, daß diese tangential in die Außenrille 5c des Strukturelementes 5a eingreift. Die Erfindung schließt nicht aus, daß auch die Strukturelemente 1, 2, 3 mit quadratischem oder mit rechteckigem Querschnitt teleskopartig, gemäß ihrer Längserstreckung, verstellbar sind.

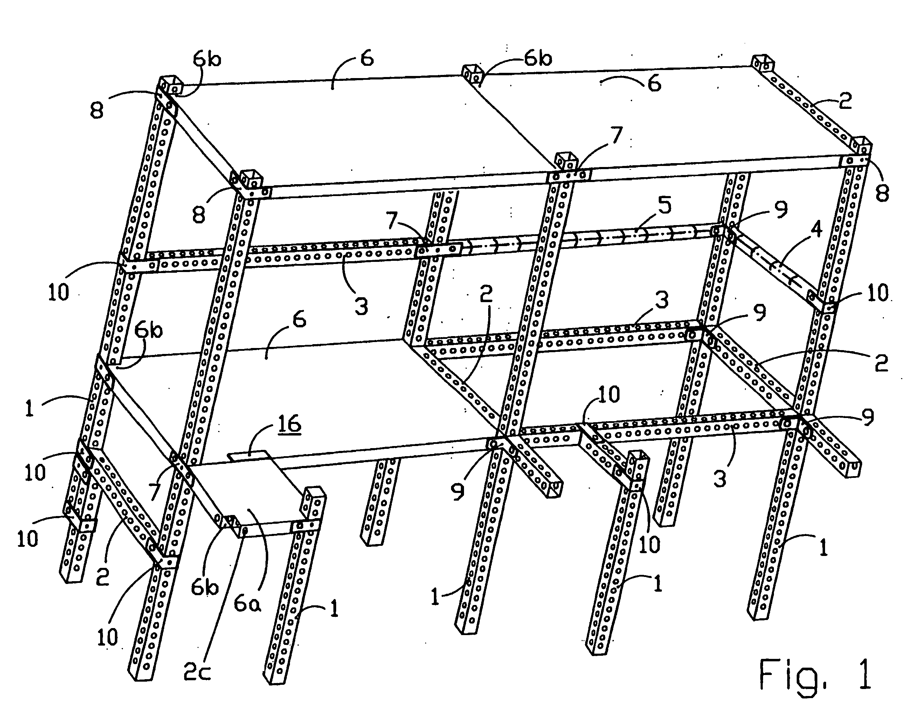

Die Ablagen 6, 6a können erfindungsgemäß von selbsttragender Art sein indem sie an mindestens einem der Seiten einen Querschnitt aufweisen welcher dem Querschnitt der Strukturelemente 1, 2, 3, 5, mit oder ohne Einbuchtungen 1a, entspricht, andernfalls können die Ablagen von, an den tragenden Strukturelementen 1, 2, 3, 5, anbringbarer Art sein und eventuell auch als vertikale Wände oder Schiede verwendbar sein. Entsprechend der Position der Pfosten 1 können die Ablagen 6, 6a an den Eckbereichen und eventuell auch an seitlichen Zwischenbereichen Ausnehmungen 6b aufweisen welche dem Querschnitt der Pfosten 1 entsprechen. Gemäß einer vorzuziehender Ausführungsform sind genannte Ausnehmungen nur an zwei Endbereichen an einer der Querseiten der Ablagen 6, 6a (Fig. 1) vorgesehen. Die selbsttragenden Ablagen 6, 6a weisen an den Eckbereichen Bohrungen 2c auf.

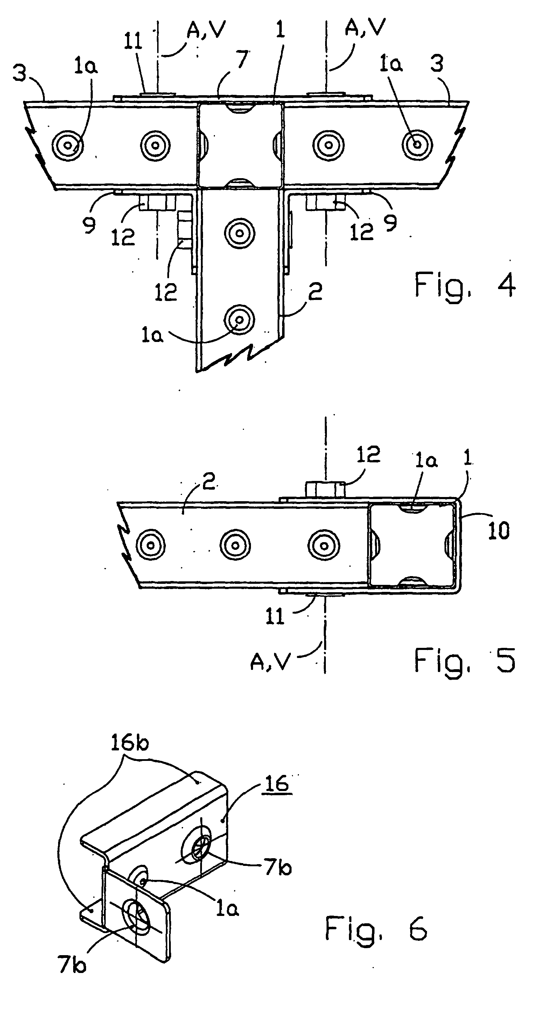

Erfindungsgemäß ist weiters die Verbindung zwischen zwei anliegenden Auflagen 6, 6a, zum Beispiel mittels, mit Auflageflanschen 16b versehenem, Verbindungselement 16 mit Stanzausformungen 7b und Einbuchtungen 1a (Fig. 6) möglich.

## Patentansprüche

1. Modulartig zusammensetzbare Struktur für Lagerregale welche wesentlich aus vertikalen Pfosten (1), aus Abstandsstücken (2), aus Längselementen (3), aus Ablagen (6, 6a), aus Verbindungselementen und/oder Befestigungselementen (11, 12) besteht, wobei die Pfosten (1), die Abstandsstücke (2) und die Längselemente (3), Rohrprofile mit quadratischem, rechteckigem oder rundem Querschnitt sind und die Ablagen (6, 6a) selbsttragend oder an einer tragenden Struktur angebracht sind, **dadurch gekennzeichnet, daß** die Pfosten (1), die Abstandsstücke (2) und die Längselemente (3) an mindestens einer der Aussenflächen, an einem oder an mehreren Bereichen oder über die gesamte Längserstreckung der Mittelachse, Einbuchtungen (1a) mit der Form eines Konusstumpfes, einer Kugelkuppe oder eines Konusstumpfes mit Kugelkuppe, einer Pyramide oder eines Pyramidenstumpfes aufweist welche gegen das Profilinnere vorstehen, unter sich gemäß einem oder mehreren, eventuell für jede Seitenfläche unterschiedlichen, Modulwerten beabstandet sind; daß die Verbindung zwischen diesen Strukturelementen (1, 2, 3) mit quadratischem, rechteckigem oder rundem (5) Querschnitt durch stirnseitige Auflage des einen an einer der Seitenwände des anderen Strukturelementes (1) unter Einsatz verschiedener Verbindungselemente (7, 8, 9, 10, 14, 15) welche Vorsprünge (1 a, 13a) aufweisen, welche mindestens teilweise in die Einbuchtungen (1a) an den Strukturelementen (1, 2, 3) eingreifen, erfolgt und dass auch Strukturelemente mit rundem Querschnitt (5) stirnseitig auf gleiche Weise mit Stukturelementen mit quadratischem oder rechteckigem Querschnitt (1, 2, 3) verbindbar sind indem am Endbereich des Strukturelementes mit rundem Querschnitt (5) eine quer angeordnete Buchse (5d) vorgesehen ist.

2. Modulartig zusammensetzbare Struktur für Lagerregale, gemäß Anspruch 1, ausgenommen eine aus Elementen mit rundem Querschnitt zusammengesetzten Struktur, **dadurch gekennzeichnet, dass** die Arretierung der Verbindung mit Strukturelementen (1, 2, 3), Verbindungselementen (7, 8, 9, 10, 14, 15) und, am Endbereich der Strukturelemente (2, 3, 5) vorgesehenen stirnseitig wirkenden mit dem äußersten Querschnitt des Strukturelementes fluchtenden oder über diesen vorstehenden, Einsätzen (13) erreicht wird welche keine Einbuchtungen (1a) aufweisen, beziehungsweise indem am Einsatz und/oder an den Verbindungselementen ein oder mehrere Körner oder eine rauhe oder geriefte Oberfläche vorgesehen sind und/oder an jenen Strukturelementen, an welchen andere Strukturelemente stirnseitig angebracht werden, eine raue, gerändelte oder geriefte Oberfläche vorgesehen ist.

3. Modulartig zusammensetzbare Struktur für Lagerregale gemäß den Ansprüchen 1 oder 2, **dadurch gekennzeichnet, daß** die Verbindungselemente (7, 8, 9, 10, 14, 15) Stanzausformungen (7b) mit der Form eines Konus oder eines Pyramidenstumpfes aufweisen welcher gegen das zu befestigende, stirnseitig an einer der Längsflächen eines zweiten Strukturteiles (1) mit quadratischem oder rechteckigem Querschnitt anliegenden Strukturelementes vorsteht und mit einer Bohrung für eine Befestigungsschraube (11) versehen sind und daß diese Stanzausformungen (7b), nach abgeschlossener Verbindung, in entsprechende Bohrungen (2c) ragen welche an den Endbereichen dieser Strukturelemente (2, 3) vorgesehen sind, beziehungsweise in die durchgehende, mit eventueller Ausschmiegung versehene, Bohrung einer Buchse (5d) ragen welche querliegend am Endbereich des Strukturelementes mit rundem Querschnitt (5) vorgesehen ist.

4. Modulartig zusammensetzbare Struktur für Lagerregale gemäß den Ansprüchen 1, 2, 3 **dadurch gekennzeichnet, daß** die Bemaßung der zu verbindenden Strukturelemente (1, 2, 3, 5), der Verbindungselemente (7, 8, 9, 10, 14, 15), die Position der durch die Bohrungen (2c) oder durch die Buchse (5d) laufenden Achse (A), sowie die Position der durch die entsprechenden, an den Verbindungselementen vorgesehenen Stanzausformungen (7b) laufende Achse (V), derart ist, daß in Zusammenbaustellung diese letzte Achse (V) etwas näher an der Längsachse des vertikalen Strukturelementes (1) liegt als die Achse (A) welche durch die Bohrungen (2c) läuft.

5. Modulartig zusammensetzbare Struktur für Lagerregale, gemäß den Ansprüchen von 1 bis 4, **dadurch gekennzeichnet, daß** die Schraube (11) mit, der Ausschmiegung der Stanzausformungen (7b) entsprechendem Senkkopf, während des Eindrehens in die Mutter (12) und Festziehens der mit Stanzausformungen (7b) versehenen Flanschen der Verbindungselemente (7, 8, 9, 10, 14, 15) das progressive Eindringen der konischen Vorsprünge der Stanzausformungen (7b) in die Bohrungen (2c), beziehungsweise in die durchgehende, eventuell mit Ausschmiegung versehene, Bohrung der Buchse (5d) bewirkt, wobei durch diese Eindringbewegung wegen der konischen oder geneigten Außenfläche der Vorsprünge der Stanzausformungen (7b) eine Kraft (S) entsteht welche entlang der Längsachse des Strukturelementes (2, 5) wirkt und dieses mit der Stimseite gegen die entsprechende Seitenfläche des zweiten zu verbindenden Strukturelementes (1) drückt.

6. Modularig zusammensetzbare Struktur für Lagerregale, gemäß den Ansprüchen von 1 bis 5, **dadurch gekennzeichnet, daß** am Endbereich der Strukturelemente (2, 3, 5) welche stirnseitig mit den selben oder mit anderen Elementen (1) der Struktur verbindbar sind, ein Einsatz (13) vorgesehen ist welcher eine durchgehende, mit den Bohrungen (2c) der konischen, kegelstumpfförmigen oder pyramidenstumpfförmigen Stanzausformungen an den Flanschen der Verbindungselementen (7, 8, 9, 10, 14, 15) koaxiale Bohrung (13b) aufweist und daß die Stirnseite dieses Einsatzes mit dem äußersten Querschnitt des Profils (2, 3), in welchen dieser eingesetzt ist, in einer Ebene liegt oder von diesem etwas vorsteht.

7. Modulartig zusammensetzbare Struktur für Lagerregale, gemäß den Ansprüchen von 1 bis 6, **dadurch gekennzeichnet, daß** der Einsatz (13) betreffend die Stirnseiten unterschiedliche Merkmale aufweist und dementsprechend beidseitig verwendbar ist.

8. Modulartig zusammensetzbare Struktur für Lagerregale, gemäß den Ansprüchen von 1 bis 5, **dadurch gekennzeichnet, daß** an den Endbereichen der Strukturelemente (2, 3), innen, koaxial den Bohrungen (2c) entsprechend eine Abstandsbuchse mit durchgehender Bohrung deren Durchmesser dem größeren Durchmesser der konischen Außenfläche der Stanzausformungen (7b) entspricht, vorgesehen ist.

9. Modulartig zusammensetzbare Struktur für Lagerregale, gemäß einem oder mehrerer der vorhergehenden Ansprüche, **dadurch gekennzeichnet, daß** die Ablagen (6, 6a) zumindest entlang einem der Ränder einen Querschnitt aufweisen welcher jenem der Strukturelemente (1, 2, 3) entspricht und überdies an den Endbereichen dieses Randes die selben Funktionsmerkmale der Endbereiche der stirnseitig verbindbaren Strukturelemente (2, 3, 5) aufweist so, daß für ihre Befestigung die selben Verbindungselemente (7, 8, 9, 14, 15) wie für die Strukturelemente (1, 2, 3, 5) einsetzbar sind.

10. Modulartig zusammensetzbare Struktur für Lagerregale, gemäß den Ansprüchen 1 und 9, **dadurch gekennzeichnet, daß** die Ablagen (6, 6a) mittels Verbindungselemente (16) welche zueinander angewinkelte oder in der selben Ebene liegende, mit Stanzausformung (7b) versehene Flanschen aufweisen, untereinander anliegend verbindbar sind, dabei sind an beiden oder an einem dieser Flanschen eventuell auch Einbuchtungen (1a) und/oder Auflage- oder Einsetzflanschen (16b) vorgesehen.

11. Modulartig zusammensetzbare Struktur für Lagerregale, gemäß den Ansprüchen von 1 bis 8, **dadurch gekennzeichnet, daß** die Strukturelemente mit rundem Querschnitt (5), oder eventuell auch jene mit quadratischem oder rechteckigem Querschnitt an einem oder an beiden Endbereichen Elemente (5a) aufweisen welche entsprechenden Querschnitt aufweisen um achsial teleskopartig in die Strukturelemente eingeschoben werden zu können und welche außen umlaufende, untereinander beabstandete, Rillen (5c) oder Kerben aufweisen und mittels einer oder mehrerer radial oder gemäß einer Sekante, bzw. einer die Längsachse des Elementes querenden Geraden, wirkender Schrauben (5b) arretiert werden können.

12. Modulartig zusammensetzbare Struktur für Lagerregale, gemäß den Ansprüchen von 1 bis 8, **dadurch gekennzeichnet, daß** die axial in die rohrförmigen Strukturelemente (5) einschiebbaren Elemente (5a) T-förmig oder kreuzförmig mittels Verbindungselemente (17) verbindbar sind welche manschettenförmig sind und elastisch oder gemäß einer Einhäng- oder Scharnierachse (C) spreizbar sind oder welche aus zwei identischen Schalenteilen bestehen die durch mindestens eine Schraube (11), welche tangential mindestens teilweise in eine der umlaufenden Außenrillen (5c) eingreift, zusammengezogen werden.

13. Modulartig zusammengesetzte Struktur für Lagerregale, gemäß einem der Ansprüche von 1 bis 12, **dadurch gekennzeichnet, daß** die Bohrung (13b) des Einsatzes (13), beziehungsweise die Bohrung der Buchse (5d) über die gesamte oder über einen Teil der Länge ein Gewinde für das Eindrehen der Befestigungsschraube (11) trägt.

## Claims

1. Modular-assembly structure for storage racks which essentially comprises vertical posts (1), spacer elements (2), longitudinal elements (3), shelves (6, 6a), and connecting elements and/or fastening elements (11, 12), the posts (1), the spacer elements (2) and the longitudinal elements (3) being tube profiles with a square, rectangular or round cross section and the shelves (6, 6a) being self-supporting or being fitted on a supporting structure, **characterized in that** the posts (1), the spacer elements (2) and the longitudinal elements (3), on at least one of the outer surfaces, on one or more regions or over the entire longitudinal extent of the centre axis, have indents (1a) in the form of a truncated cone, of a dome or of a domed truncated cone, of a pyramid or of a truncated pyramid, which project towards the profile interior and are spaced apart from one another in accordance with one or more module values, which may differ for each side surface, **in that** the connection between these structural elements (1, 2, 3) with a square, rectangular or round (5) cross section takes place by the end-side abutment of one structural element against one of the side walls of the other structural element (1) using various connecting elements (7, 8, 9, 10, 14, 15), which have protrusions (1a, 13a) which engage, at least in part, in the indents (1a) on the structural elements (1, 2, 3), and **in that** structural elements with a round cross section (5) can also be connected at the end side in the same way to structural elements with a square or rectangular cross section (1, 2, 3), by virtue of a transversely arranged bushing (5d) being provided at the end region of the structural element with a round cross section (5).

2. Modular-assembly structure for storage racks according to Claim 1, apart from a structure assembled from elements with a round cross section, **characterized in that** the connection is arrested by structural elements, (1, 2, 3), connecting elements (7, 8, 9, 10, 14, 15) and inserts (13) which are provided at the end region of the structural elements (2, 3, 5), act on the end side, are aligned with the outermost cross section of the structural element, or project beyond the same, and have no indents (1a), or by one or more elevations or a rough or grooved surface being provided on the insert and/or on the connecting elements, and/or by a rough, knurled or grooved surface being provided on those structural elements on which other structural elements are fitted at the end side.

3. Modular-assembly structure for storage racks according to Claim 1 or 2, **characterized in that** the connecting elements (7, 8, 9, 10, 14, 15) have punched-out formations (7b) in the form of a cone or of a truncated pyramid which is provided with a bore for a fastening screw (11) and projects towards the structural element which is to be fastened and butts at the end side against one of the longitudinal surfaces of a second structural part (1) with a square or rectangular cross section, and **in that** these punched-out formations (7b), once connection has been completed, project into corresponding bores (2c) which are provided at the end regions of these structural elements (2, 3), or they project into the possibly chamfered through-bore of a bushing (5d) located transversely at the end region of the structural element with a round cross section (5).

4. Modular-assembly structure for storage racks according to Claims 1, 2 and 3, **characterized in that** the dimensioning of the structural elements (1, 2, 3, 5) which are to be connected and of the connecting elements (7, 8, 9, 10, 14, 15), the position of the axis (A) running through the bores (2c) or through the bushing (5d), and the position of the axis (V) running through the corresponding punched-out formations (7b) provided on the connecting elements are such that, in the assembled position, this last axis (V) is located somewhat closer to the longitudinal axis of the vertical structural element (1) than the axis (A) which runs through the bores (2c).

5. Modular-assembly structure for storage racks according to Claims 1 to 4, **characterized in that** the screw (11) with the countersunk head corresponding to the chamfer of the punched-out formations (7b), as it is screwed into the nut (12) and the flanges of the connecting elements (7, 8, 9, 10, 14, 15) which are provided with punched-out formations (7b) are tightened, causes the conical protrusions of the punched-out formations (7b) to penetrate progressively into the bores (2c) or into the possibly chamfered through-bore of the bushing (5d), this penetrating movement, on account of the conical or inclined outer surface of the protrusions of the punched-out formations (7b), producing a force (S) which acts along the longitudinal axis of the structural element (2, 5) and forces the end side of the latter against the corresponding side surface of the second structural element (1) which is to be connected.

6. Modular-assembly structure for storage racks according to Claims 1 to 5, **characterized in that** provided at the end region of the structural elements (2, 3, 5), which can be connected at the end side to the same or to different elements (1) of the structure, is an insert (13) which has a through-bore (13b) which is coaxial with the bores (2c) of the conical, truncated-cone or truncated-pyramid punched-out formations on the flanges of the connecting elements (7, 8, 9, 10, 14, 15), and **in that** the end side of this insert is located in the same plane as the outermost cross section of the profile (2, 3) into which the insert is inserted, or projects some way from this cross section.

7. Modular-assembly structure for storage racks according to Claims 1 to 6, **characterized in that** the insert (13) has different features on its end sides and can thus be used on both sides.

8. Modular-assembly structure for storage racks according to Claims 1 to 5, **characterized in that** provided coaxially inside the end regions of the structural elements (2, 3), corresponding to the bores (2c), is a spacer bushing with a through-bore with a diameter which corresponds to the larger diameter of the conical outer surface of the punched-out formations (7b).

9. Modular-assembly structure for storage racks according to one or more of the preceding claims, **characterized in that** the shelves (6, 6a), at least along one of the borders, have a cross section which corresponds to that of the structural elements (1, 2, 3) and also, at the end regions of this border, has the same functional features as the end regions of the structural elements (2, 3, 5) which can be connected at the end side, such that, for fastening the shelves, it is possible to use the same connecting elements (7, 8, 9, 14, 15) as for the structural elements (1, 2, 3, 5).

10. Modular-assembly structure for storage racks according to Claims 1 and 9, **characterized in that** the shelves (6, 6a) can be connected to one another in abutment by means of connecting elements (16) which have flanges which are provided with a punched-out formation (7b) and are angled in relation to one another or located in the same plane, indents (1a) and/or abutment or insertion flanges (16b) possibly also being provided on the two flanges or on one of these flanges.

11. Modular-assembly structure for storage racks according to Claims 1 to 8, **characterized in that** the structural elements with a round cross section (5), or possibly also those with a square or rectangular cross section, have, at one or both end regions, elements (5a) which have an appropriate cross section in order to be capable of being pushed telescopically in the axial direction into the structural elements and which have spaced-apart grooves (5c) or notches running around the outside and can be arrested by means of one or more screws (5b) which act radially or along a secant or a straight line which crosses over the longitudinal axis of the element.

12. Modular-assembly structure for storage racks according to Claims 1 to 8, **characterized in that** the elements (5a) which can be pushed axially into the tubular structural elements (5) can be connected in a T-shaped or cross-form manner by means of connecting elements (17) which are sleeve-like and elastic or can be expanded in accordance with an engagement or hinge axis (C) or which comprise two identical shell parts which are drawn together by at least one screw (11) which engages tangentially, at least in part, in one of the encircling outer grooves (5c).

13. Modular-assembly structure for storage racks according to one of Claims 1 to 12, **characterized in that** the bore (13b) of the insert (13) or the bore of the bushing (5d), over its entire length or over part of its length, bears a thread into which the fastening screw (11) can be screwed.

## Revendications

1. Structure à assemblage modulaire pour des rayons de stockage, formée essentiellement de piliers (1) verticaux, d'éléments d'espacement (2) et d'éléments longitudinaux (3), de rayonnages (6, 6a), d'éléments de liaison et/ou d'éléments de fixation (11, 12), les piliers (1), les éléments d'espacement (2) et les éléments longitudinaux (3) étant des profilés tubulaires à section transversale carrée, rectangulaire ou ronde et les rayonnages (6, 6a) étant autoporteurs ou montés sur une structure porteuse, **caractérisée en ce que** les piliers (1), les éléments d'espacement (2) et les éléments longitudinaux (3) présentent, sur au moins l'une des faces extérieures, sur une ou en plusieurs zones ou sur l'étendue longitudinale globale de l'axe médian, des bosses rentrantes (1a), ayant la forme d'un tronc de cône, d'une coupelle sphérique ou d'un tronc de cône à coupelle sphérique, d'une pyramide ou d'un tronc de pyramide, faisant saillie vers l'intérieur du profilé, qui sont espacées entre elles selon une ou plusieurs valeurs modulaires, éventuellement différentes pour chaque face latérale ; **en ce que** la liaison entre ces éléments structurels (1, 2, 3), à section transversale carrée, rectangulaire ou ronde (5), s'effectue par pose frontale de l'un, sur l'une des parois latérales de l'autre élément de structure (1), en utilisant différents éléments de liaison (7, 8, 9, 10, 14, 15) présentant des saillies (la, 13a), s'engageant au moins partiellement dans les bosses rentrantes (1a) situées sur les éléments de structure (1, 2, 3), et **en ce que**, également, des éléments de structure à section transversale (5) ronde sont susceptibles d'être reliés frontalement de manière identique à des éléments de structure à section transversale (1, 2, 3) carrée ou rectangulaire, par le fait que, sur la zone d'extrémité de l'élément de structure à section transversale (5) ronde, est prévue une douille (5d) disposée transversalement.

2. Structure à assemblage modulaire pour des rayons de stockage selon la revendication 1, à l'exception d'une structure assemblée à partir d'éléments à section transversale ronde, **caractérisée en ce que** le blocage de la liaison est effectué avec des éléments de structure (1, 2, 3), des éléments de liaison (7, 8, 9, 10, 14, 15) et des inserts (13) agissant frontalement, prévus sur la zone d'extrémité des éléments de structure (2, 3, 5), et en alignement avec la section transversale la plus extérieure de l'élément de structure ou bien en saillie de celle-ci, les inserts ne présentant aucune bosse rentrante (1a), respectivement par le fait que, sur l'insert et/ou sur les éléments de liaison, sont prévus un ou plusieurs ergots ou bien une surface rendue rugueuse ou striée, et/ou sur les éléments de structure, auxquels sont montés frontalement d'autres éléments de structure, est prévue une surface rugueuse, moletée ou striée.

3. Structure à assemblage modulaire pour des rayons de stockage selon la revendication 1 ou 2, **caractérisée en ce que** les éléments de liaison (7, 8, 9, 10, 14, 15) présentent des découpes d'estampage (7b) ayant la forme d'un cône ou d'un tronc de pyramide, en saillie vers l'élément de structure à fixer, en appui frontalement sur l'une des faces longitudinales d'une deuxième partie de structure (1) à section transversale carrée ou rectangulaire, et munis d'un perçage pour une vis de fixation (11) et **en ce que** ces découpes d'estampage (7b), une fois la liaison accomplie, pénètrent dans des perçages (2c) correspondants, qui sont prévus sur les zones d'extrémité de ces éléments de structure (2, 3), respectivement dans le perçage continu, muni d'un éventuel lamage, d'une douille (5d) prévue transversalement sur la zone d'extrémité de l'élément de structure à section transversale (5) ronde.

4. Structure à assemblage modulaire pour des rayons de stockage selon les revendications 1, 2, 3, **caractérisée en ce que** les dimensions des éléments de structure (1, 2, 3, 5) à relier, des éléments de liaison (7, 8, 9, 10, 14, 15), la position de l'axe (A) passant par les perçages (2c) ou par la douille (5d) ainsi que la position de l'axe (V), passant par les découpes d'estampage (7b) correspondants, prévus sur les éléments de liaison, sont telles que, à la position assemblée, ce dernier axe (V) s'étend un peu plus près de l'axe longitudinal de l'élément de structure vertical (1) que l'axe (A) qui passe par les perçages (2c).

5. Structure à assemblage modulaire pour des rayons de stockage selon les revendications 1 à 4, **caractérisée en ce que** la vis (11), à tête noyée correspondant au lamage des découpes d'estampage (7b), pendant la rotation dans l'écrou (12) et le blocage par serrage des rebords, munis de découpes d'estampage (7b), des éléments de liaison (7, 8, 9, 10, 14, 15), provoque la pénétration progressive des saillies coniques de découpes d'estampage (7b) dans les perçages (2c), respectivement dans le perçage continu, muni éventuellement de lamage, de la douille (5d), sachant que, du fait de ce déplacement de pénétration, du fait de la surface extérieure conique ou inclinée des saillies des découpes d'estampage (7b), est produite une force (S) agissant le long de l'axe longitudinal de l'élément de structure (2, 5) et pressant celui-ci, par la face frontale, contre la face latérale correspondante du deuxième élément de structure (1) à relier.

6. Structure à assemblage modulaire pour des rayons de stockage selon les revendications 1 à 5, **caractérisée en ce que**, sur la zone d'extrémité des éléments de structure (2, 3, 5) susceptibles d'être reliés frontalement aux mêmes éléments (1) ou à d'autres éléments (1) de la structure, est prévu un insert (13) présentant un perçage (13b) continu, coaxial avec les perçages (2c) des découpes d'estampage coniques, en forme de tronc de cône ou en forme de tronc de pyramide, sur des rebordes des éléments de liaison (7, 8, 9, 10, 14, 15), et **en ce que** la face frontale de cet insert est située dans le même plan, ou un peu en saillie de celui-ci, que la section transversale la plus extérieure du profil (2, 3) dans laquelle celui-ci est inséré.

7. Structure à assemblage modulaire pour des rayons de stockage selon les revendications 1 à 6, **caractérisée en ce que** l'insert (13) présente des caractéristiques différentes concernant les faces frontales et est utilisable, de manière correspondante, des deux côtés.

8. Structure à assemblage modulaire pour des rayons de stockage selon les revendications 1 à 5, **caractérisée en ce que**, sur les zones d'extrémité des éléments de structure (2, 3), est prévue une douille d'espacement, intérieure, correspondante, coaxialement aux perçages (2c), ayant un perçage continu dont le diamètre correspond au plus grand diamètre de la surface extérieure conique des découpes d'estampage (7b).

9. Structure à assemblage modulaire pour des rayons de stockage selon l'une ou plusieurs des revendications précédentes, **caractérisée en ce que** les rayonnages (6, 6a) présentent, au moins le long d'un des bords, une section transversale correspondant à celle des éléments de structure (1, 2, 3) et, en plus de cela, sur les zones d'extrémité de ce bord, présentent les mêmes caractéristiques fonctionnelles que les zones d'extrémité des éléments de structure (2, 3, 5) susceptibles d'être reliés frontalement, de manière que les mêmes éléments de liaison (7, 8, 9, 14, 15) que pour les éléments de structure (1, 2, 3, 5) soient utilisables pour leur fixation.

10. Structure à assemblage modulaire pour des rayons de stockage selon les revendications 1 à 9, **caractérisée en ce que** les rayonnages (6, 6a) sont susceptibles d'être reliés, en appui les uns les autres, à l'aide d'éléments de liaison (16) qui présentent des rebords inclinés sous un certain les uns par rapport aux autres ou bien situés dans le même plan et munis d'une découpe d'estampage (7b), des bosses rentrantes (1a) et/ou des rebords de dépose ou d'insertion (16b) étant éventuellement prévues également sur les deux ou sur l'un de ces rebords.

11. Structure à assemblage modulaire pour des rayons de stockage selon les revendications 1 à 8, **caractérisée en ce que** les éléments de structure à section transversale ronde (5), ou bien éventuellement également ceux à section transversale carrée ou rectangulaire, présentent, sur une ou les deux zones d'extrémité, des éléments (5a) à section transversale correspondante, pour pouvoir être insérés axialement de façon télescopique dans les éléments de structure, et qui présentent des cannelures (5c) ou des entailles faisant le pourtour extérieur, espacées les unes des autres, et peuvent être bloqués, au moyen d'une ou plusieurs vis (5b) agissant radialement ou selon une sécante, respectivement selon une droite traversant l'axe longitudinal de l'élément.

12. Structure à assemblage modulaire pour des rayons de stockage selon l'une des revendications 1 à 8, **caractérisée en ce que** les éléments (5a), pouvant être insérés axialement dans les éléments de structure (5) tubulaires, sont susceptibles d'être reliés, en forme de T ou en forme de croix, à l'aide d'éléments de liaison (17) qui sont réalisés sous forme de manchettes et sont susceptibles d'être écartés, élastiquement ou selon un axe d'accrochage ou de charnière (C), ou qui sont formés de deux parties de coque identiques et sont assemblées les unes les autres au moyen d'une vis (11), s'engageant tangentiellement au moins partiellement dans l'une des cannelures extérieures (5c) du pourtour.

13. Structure à assemblage modulaire pour des rayons de stockage selon l'une des revendications 1 à 12, **caractérisée en ce que** le perçage (13b) de l'insert (13), respectivement le perçage de la douille (5d), porte, sur la totalité ou une partie de la longueur, un filetage pour le vissage de la vis de fixation (11).
